# EUROPÄISCHE PATENTSCHRIFT

(11) **EP 2 621 782 B1**
(45) Veröffentlichungstag und Bekanntmachung des Hinweises auf die Patenterteilung: **28.11.2018**
(21) Anmeldenummer: 11743057.9
(22) Anmeldetag: 08.08.2011
(51) Int. Cl.: F16D 48/06

(54) **VERFAHREN ZUM LASTFREIEN ÖFFNEN EINER TRENNKUPPLUNG**
METHOD FOR LOAD-FREE OPENING OF A SEPARATING CLUTCH
PROCÉDÉ POUR L'OUVERTURE HORS CHARGE D'UN EMBRAYAGE DE COUPURE

(30) Priorität: 29.09.2010 DE 102010041581
(43) Veröffentlichungstag der Anmeldung: 07.08.2013
(73) Patentinhaber: Robert Bosch GmbH, 70442 Stuttgart (DE)
(72) Erfinder: MERKEL, Tino, 71701 Schwieberdingen (DE); PETER, Markus, 74374 Zaberfeld (DE)
(86) Internationale Anmeldenummer: PCT/EP2011/063600
(87) Internationale Veröffentlichungsnummer: WO 2012/041585

(56) Entgegenhaltungen:
- EP-A2- 1 522 764
- DE-A-102008 042 056
- DE-A1-102006 003 715

## Beschreibung

### Stand der Technik

Eine Kupplung, wie zum Beispiel eine Klauenkupplung, wird bei Elektro- und Hybridfahrzeugen insbesondere bei elektrisch angetriebenen Achsen eingesetzt, um den elektrischen Antrieb von den anzutreibenden Rädern trennen zu können.

Die Klauenkupplung kann nur geöffnet werden, wenn kein bzw. ein sehr kleines Drehmoment an der Kupplungsstelle anliegt. Diese Anforderung kann erfüllt werden, indem Verluste, die z.B. durch Reibung entstehen, beispielsweise durch den elektrischen Antrieb ausgeglichen werden. Allerdings ist es ohne zusätzliche Messungen und Berechnungen schwer möglich den Betriebszustand herzustellen, der Drehmomentfreiheit an der Kupplungsstelle gewährt.

Aus der EP 1 522 764 A2 ist ein Verfahren zum Öffnen einer Trennkupplung bekannt, bei dem das Schließen und Öffnen der Trennkupplung mittels von Schwingungen erleichtert wird, die durch das Variieren eines eine elektrische Maschine steuernden Stroms erzeugt werden. Durch die Schwingungen durchläuft das Kupplungsmoment einen Nulldurchgang, bei dem die Trennkupplung lastfrei geöffnet oder geschlossen werden kann.

### Offenbarung der Erfindung

Es kann daher ein Bedarf an einem verbesserten Verfahren zum Öffnen der Kupplung bestehen, bei dem ein drehmomentfreier Betriebszustand der Kupplung zuverlässig und schnell hergestellt wird.

Diese Aufgabe kann durch den Gegenstand der vorliegenden Erfindung gemäß den unabhängigen Ansprüchen gelöst werden. Vorteilhafte Ausführungsformen der vorliegenden Erfindung sind in den abhängigen Ansprüchen beschrieben.

Im Folgenden werden Merkmale, Einzelheiten und mögliche Vorteile einer Vorrichtung gemäß Ausführungsformen der Erfindung im Detail diskutiert. Gemäß einem ersten Aspekt der vorliegenden Erfindung wird ein Verfahren zum Lastfreien Öffnen einer Trennkupplung beschrieben. Das Verfahren weist die folgenden Schritte auf: Empfangen eines Auskuppelungs-Signals; Anlegen eines negativen Drehmoments mittels einer Antriebsmaschine an die Trennkupplung; Anlegen eines positiven vordefinierten Drehmoments mittels einer Antriebsmaschine an die Trennkupplung; Öffnen der Trennkupplung, sobald der Betrag des an der Trennkupplung anliegenden Drehmoments innerhalb vorgegebener Grenzwerte liegt. Dabei ist das negative Drehmoment kleiner als das Drehmoment einer Abtriebsseite und das positive Drehmoment ist größer als das Drehmoment der Abtriebsseite. Dabei wird das negative Drehmoment durch Einstellen eines Freilaufs oder durch einen aktiven Kurzschluss der Antriebsmaschine erzeugt. Anders ausgedrückt basiert die Idee der vorliegenden Erfindung auf einem Einstellen eines Drehmoments im bekannten Beriech des Systems durch ein antriebsseitiges Abbremsen. Und einem anschließenden antriebsseitigen Beschleunigen, so dass ausgehend von dem bekannten Bereich des Systems das Drehmoment mit der Zeit von der Antriebsseite erhöht wird, bis es mit dem abtriebsseitigen Drehmoment im Wesentlichen übereinstimmt. Damit wird ein lastfreies Öffnen der Kupplung ermöglicht.
Die Trennkupplung ist ausgestaltet Drehmomente zwischen einer Antriebsseite, wie z.B. einer mit dem Motor verbundenen Welle und einer Abtriebsseite, wie z.B. einer mit einer Fahrzeugachse verbundenen Welle, zu übertragen. Ein erster Teil der Kupplung kann hierzu mit der Antriebsseite und ein zweiter Teil mit der Abtriebsseite verbunden sein. Die Trennkupplung kann beispielsweise als eine Klauenkupplung ausgestaltet sein.
Zunächst wird z.B. durch eine Kontrolleinheit ein Auskuppelungs-Signal empfangen. Das Auskuppelungs-Signal kann beispielsweise auf einer automatischen Fehlererkennung basieren oder von einem Benutzer wie z.B. dem Fahrer generiert werden.
Anschließend wird ein antriebsseitiges negatives Drehmoment an die Kupplung mittels einer Antriebsmaschine wie z.B. einem elektrischen Motor, angelegt. Das negative Drehmoment ist kleiner als das Drehmoment einer Abtriebsseite. D.h. das negative Drehmoment wirkt z.B. der Rotation einer mit den Rädern verbundenen Achse entgegen. Anders ausgedrückt wird hier mittels der Antriebsmaschine gebremst.

Das Anlegen des Drehmoments kann beispielsweise durch Aussenden eines entsprechenden Brems-Signals durch eine Kontrolleinheit an die Antriebsmaschine geschehen.

Nach einer gewissen gegebenenfalls vorgegebenen Zeit wird ein positives vordefiniertes Drehmoment an die Kupplung angelegt. Anders ausgedrückt wird mittels der Antriebsmaschine beschleunigt, so dass das antriebsseitige Drehmoment größer ist als das Drehmoment der Abtriebsseite. Das positive Drehmoment ist vordefiniert, d.h. beispielsweise findet eine lineare Beschleunigung statt, so dass zeitlich betrachtet eine Drehmomentrampe durchfahren wird. Der definierte Anstieg des Drehmoments stellt sicher, dass nach einer gewissen Zeit Drehmomentfreiheit an der Kupplung herrscht.

Bevor das positive Drehmoment angelegt wird kann ein vorgegebener Zeitabschnitt verstreichen, in dem das negative Drehmoment angelegt ist. Dieser Zeitabschnitt kann z.B. maschinenbedingt sein und beispielsweise davon abhängen wie effizient der Bremsvorgang ist und wie lange es dauert, bis der Betrag des antriebsseitigen Drehmoments unter den Betrag des abtriebsseitigen Drehmoments fällt. Dieser Zeitabschnitt kann z.B. 10 bis 20 Millisekunden (ms) betragen.

Sobald der Betrag des an der Trennkupplung anliegenden Drehmoments innerhalb vorgegebener Grenzwerte liegt, wird die Trennkupplung geöffnet. Anders ausgedrückt, sobald die Differenz des abtriebsseitigen und des antriebsseitigen Drehmoments innerhalb bestimmter Schwellenwerte liegt ist die Kupplung im Wesentlichen lastfrei und kann sicher geöffnet werden. Der Grenzwert kann dabei beispielsweise auf 4 Newton-Meter (Nm) festgesetzt sein. Hierdurch kann beispielsweise beim Öffnen einer Kupplung in einem Fahrzeug, Fahrkomfort gewährleistet werden, denn je geringer die Grenzwerte festgesetzt werden, desto unmerklicher und ruckfreier kann die Kupplung geöffnet werden.

Gemäß einem zweiten Aspekt der Erfindung wird eine Kontrolleinheit beschrieben, die ausgestaltet ist das oben dargestellte Verfahren zu Steuern. Hierzu kann die Kontrolleinheit mit der Trennkupplung und mit der Antriebsmaschine verbunden sein.

Gemäß einem dritten Aspekt der Erfindung wird ein Computerprogrammelement beschrieben, welches gemäß einem weiteren Aspekt der Erfindung auf einem computerlesbaren Medium gespeichert werden kann. Das Computerprogrammelement ist ausgestaltet das oben beschriebene Verfahren durchzuführen bzw. zu steuern, wenn es auf einem Prozessor ausgeführt wird.

Das erfindungsgemäße Verfahren, die Kontrolleinheit und das Computerprogrammelement können sicherstellen, dass die Kupplung robust, zuverlässig und sicher geöffnet wird.

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich.
- Fig. 1: zeigt schematisch den zeitlichen Verlauf eines Drehmoments bei Versuchen eine Lastfreiheit an einer Trennkupplung herzustellen
- Fig. 2: zeigt schematisch den zeitlichen Verlauf eines Drehmoments bei der Durchführung des Verfahrens gemäß einem Ausführungsbeispiel der Erfindung
- Fig. 3: zeigt schematisch einen Ausschnitt der Ansteuerung des elektrischen Antriebs im Freilauf gemäß einem Ausführungsbeispiel der Erfindung
- Fig. 4: zeigt schematisch einen Ausschnitt der Ansteuerung des elektrischen Antriebs im aktiven Kurzschluss gemäß einem Ausführungsbeispiel der Erfindung
- Fig. 5: zeigt ein schematisches Flussdiagramm des Verfahrens gemäß einem Ausführungsbeispiel der Erfindung

Alle Figuren sind lediglich schematische Darstellungen erfindungsgemäßer Verfahren bzw. ihrer Verfahrensschritte. Insbesondere Abstände und Größenrelationen sind in den Figuren nicht maßstabsgetreu wiedergegeben. In den verschiedenen Figuren sind sich entsprechende Elemente mit den gleichen Referenznummern versehen.

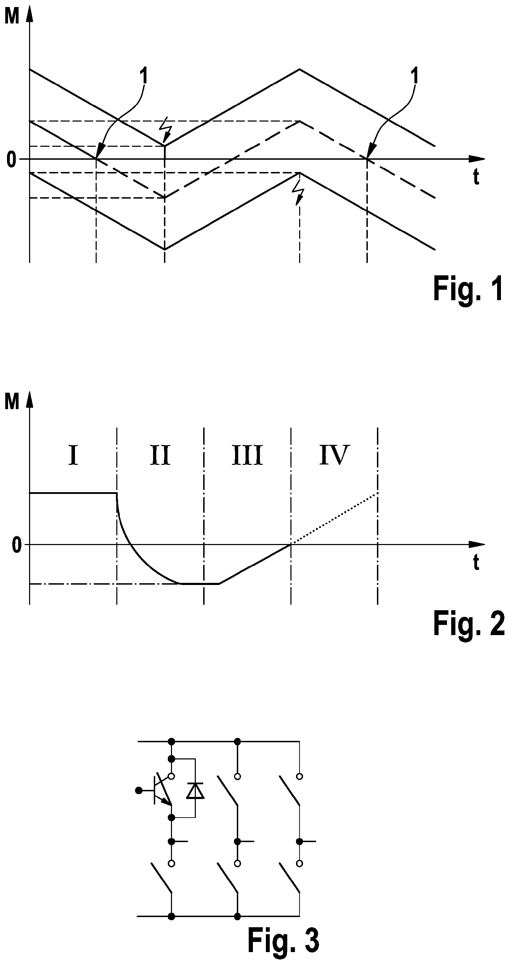

In Fig. 1 ist der zeitliche Verlauf eines Drehmoments bei Versuchen eine Lastfreiheit an einer Trennkupplung herzustellen gezeigt. In dem dargestellten Koordinatensystem ist auf der Abszisse die Zeit t in Millisekunden und auf der Ordinate das Drehmoment M in Newton-Meter aufgetragen.

Zum Öffnen der Kupplung muss an der Kupplungsstelle möglichst Drehmomentfreiheit hergestellt werden. Hierzu kann versucht werden die Reibungsverluste auszugleichen. Gelingt dies nicht kann alternativ versucht werden, z.B. durch einen elektrischen Antrieb ein Drehmoment an der Kupplungsstelle einzustellen, dass etwas größer als Null ist und anschließend eine Drehmomentrampe mit negativer Steigung zu durchfahren, so dass der Nulldurchgang 1 des Drehmoments an der Kupplungsstelle durchfahren wird und die Kupplung geöffnet werden kann.

Wird auf den Einsatz eines Drehmomentsensors verzichtet, kann das Drehmoment durch die Erfassung anderer Größen des Antriebs berechnet werden. Diese Berechnung kann jedoch unter Umständen fehlerbehaftet sein, falls sich Größen im System verändern die zur Berechnung des mechanischen Drehmoments des elektrischen Antriebs benötigt werden oder falls diese Größen nicht genau appliziert werden können. Wenn also der Ausgangspunkt des Drehmomentverlaufs nicht genau bestimmt werden kann, kann es bei dem oben beschriebenen Verfahren vorkommen, dass der Nulldurchgang des Drehmomentverlaufs nicht annähernd oder der benötigte Bereich nur unzureichend erreicht wird und die Kupplung nicht geöffnet werden kann.

In Fig. 1 sind drei unterschiedliche Drehmomentverläufe dargestellt. Bei dem mittleren gestrichelt dargestellten Drehmomentverlauf führt die oben beschriebene Vorgehensweise zum Erfolg. An den mit 1 gekennzeichneten Punkten ist die Kupplung lastfrei und kann geöffnet werden.

Allerdings ist die Vorgehensweise erfolglos, wenn der Anfangspunkt der Drehmomentrampe mit negativer Steigung nicht bekannt ist. Dies ist in dem oberen und im unteren Drehmomentverlauf in Fig. 1 dargestellt. Dort wird kein Nulldurchgang 1 erreicht und die Kupplung kann nicht geöffnet werden. Dieser Fehlerfall ist mit einem Blitz in Fig. 1 gekennzeichnet.

In Fig. 2 ist schematisch der zeitliche Verlauf eines Drehmoments bei der Durchführung des Verfahrens gemäß einem Ausführungsbeispiel der Erfindung dargestellt. Das Drehmoment, welches an dem mit dem Antrieb verbundenen Teil der Kupplung anliegt ist auf der Ordinate aufgetragen. Es ist in Relation zum Drehmoment am Kupplungsteil, der mit dem Abtrieb verbunden ist dargestellt, d.h. bei einem Drehmoment von Null sind die an beiden Seiten der Kupplung anliegenden Drehmomente gleich, so dass ein lastfreies Öffnen der Kupplung möglich ist.

In einer ersten Phase I ist ein konstanter gerader Drehmomentverlauf dargestellt. Dieses Drehmoment liegt z.B. bei einem Normalbetrieb des Systems an der Kupplung an. In der zweiten Phase II wird z.B. nach Empfangen eines Auskuppelungs-Signals ein negatives Drehmoment mittels des Antriebs, wie z.B. einer elektrischen Maschine, an die Kupplung angelegt. Dadurch fällt das Drehmoment ab und stellt sich nach einer bestimmten Zeit auf einen Wert unterhalb der x-Achse in Fig. 2 ein. Somit ist der Zustand des Systems und damit ein Ausgangspunkt beispielsweise einer zu durchfahrenden Drehmomentrampe bekannt. Das Drehmoment fällt dabei in Phase II z.B. entlang einer Hyperbel ab und stellt sich nach einer maschinenbedingten Zeit von z.B. 10 bis 20 ms auf einen Wert ein, der z.B. dem Drehmoment der freilaufenden elektrischen Maschine entspricht.

In einer dritten Phase III kann in einen aktiven Modus des Antriebs, wie z.B. Drehzahlregelung, Drehmomentsteuerung, und Ähnliches umgeschaltet werden und dadurch ein positives Drehmoment an der Kupplung angelegt werden. Das Drehmoment kann so aus dem negativen in den positiven Bereich gebracht werden. Alternativ kann eine Rampe mit einer vorgegebenen Steigung bzw. vorgegebenen Kurvenverlauf durchfahren werden, bis der Nulldurchgang erreicht ist. Beim Nulldurchgang kann die Kupplung geöffnet werden. Anschließend kann in der vierten Phase IV z.B. beschleunigt und in den Normalbetrieb übergegangen werden.

Für das Anlegen des negativen Drehmoments mittels des Antriebs in Phase II sind zwei Möglichkeiten vorgesehen: das negative Drehmoment wird durch einen Freilauf der Antriebsmaschine oder mittels eines aktiven Kurzschlusses der Antriebsmaschine eingestellt.

Wird der elektrische Antrieb in den Freilauf geschaltet, dreht die elektrische Maschine ohne ein elektrisches Drehmoment stellen zu können. D.h., dass die elektrische Maschine passiv ist und durch die Bewegung des Fahrzeugs und die Kopplung mit der Achse mitgeschleppt wird. Es entsteht somit durch die Reibung und Trägheit der elektrischen Maschine ein negatives Moment an der Kupplung, das der Rotation der abtriebsseitigen Achse entgegenwirkt (Phase II in Fig. 2). Es ist dadurch bekannt, dass das Moment an der Kupplungstelle der Kupplung negativ ist und ein positives Drehmoment kann angelegt werden.

Das Reibungsmoment nimmt mit zunehmender Drehzahl zu. Wird z.B. eine permanent erregte Synchronmaschine (PSM) als elektrische Maschine eingesetzt, kann im Freilauf die Spannung im Zwischenkreis des Umrichters unzulässig hoch werden. Bei höheren Drehzahlen erhöht sich diese Gefahr, die zur Zerstörung des Umrichters führen kann. Daher kann folgendermaßen sichergestellt werden, dass das Maximum der Zwischenkreisspannung nicht überschritten wird:
Schaltet man den elektrischen Antrieb bei Verwendung einer elektrischen Maschine mit Erregung, z.B. PSM als Antrieb in einen aktiven Kurzschluss, so dass die Klemmen der Statorwicklungen kurzgeschlossen sind, entsteht ein Kurzschlussmoment mit negativem Vorzeichen. Das Kurzschlussmoment wirkt der Rotation des Antriebs entgegen und sein Betrag nimmt mit zunehmender Drehzahl ab. Es ist also auch bei dem aktiven Kurzschluss bekannt, dass das Moment an der Kupplungstelle der Kupplung negativ ist.

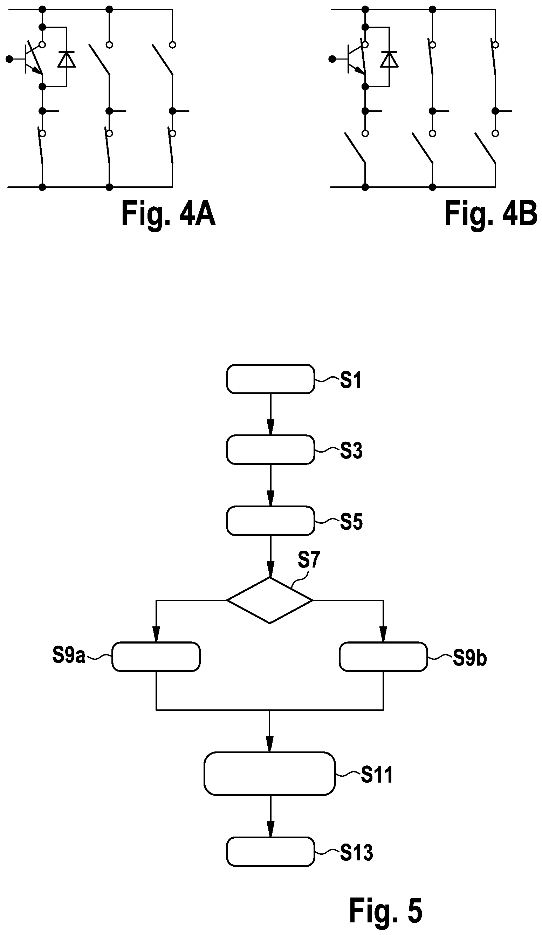

In Fig. 3 ist die Ansteuerung von Transistoren des Antriebs bei dem oben beschriebenen Freilauf dargestellt. Dabei sind z.B. alle Halbleiter geöffnet. In Fig. 4A und 4B sind alternative Ansteuerungsmöglichkeiten für die Ansteuerung von Transistoren des Antriebs bei einem aktiven Kurzschluss dargestellt. Hierfür sind die Halbleiter zum Teil geschlossen und zum Teil offen.

Beispielsweise bei Verwendung einer elektrischen Maschine, wie z.B. PMS als Antrieb kann das Umschalten in einen Bremsbetrieb drehzahlabhängig geschehen. Hierzu kann z.B. von einer Kontrolleinheit eine aktuelle Drehzahl ermittelt werden. Liegt der ermittelte Drehzahlwert unterhalb eines vorgegebenen Schwellenwerts, so kann die elektrische Maschine in den Freilauf geschaltet werden und dadurch ein negatives Drehmoment an der Antriebsseite der Kupplung angelegt werden. Der Verlauf des Drehmoments im Freilauf ist dabei bekannt und z.B. abhängig von der Bauart der Antriebsmaschine.

Liegt der ermittelte aktuelle Drehzahlwert oberhalb des Schwellenwerts besteht die Gefahr einer Überhöhung der Zwischenkreisspannung des Umrichters und die elektrische Maschine wird in den aktiven Kurzschluss geschaltet.

In Fig. 5 ist schematisch ein Flussdiagramm des Verfahrens gemäß einem Ausführungsbeispiel der Erfindung dargestellt. In Schritt S1 wird z.B. durch eine Kontrolleinheit ein Auskuppelungs-Signal empfangen. Das Auskuppelungs-Signal kann beispielsweise auf einer automatischen Fehlererkennung basieren oder von einem Benutzer wie z.B. dem Fahrer generiert werden. Beispielsweise kann das Auskuppelungs-Signal die Information enthalten, dass die Antriebsmaschine die maximale Drehzahl erreicht hat.

In Schritt S3 wird der Auskupplungsvorgang gestartet. Hierzu wird in Schritt S5 ein aktueller Drehzahlwert ermittelt. In Schritt S7 wird die ermittelte aktuelle Drehzahl mit einem Schwellenwert verglichen. In Schritt 9a, 9b wird abhängig von der Drehzahl eine der folgenden Methoden eingesetzt, um ein Bremsmoment, d.h. ein negatives Drehmoment antriebsseitig an der Kupplung anzulegen: Ist die ermittelte Drehzahl kleiner als der Schwellenwert, so wird die Antriebsmaschine in Schritt 9a in den Freilauf geschaltet. Ist die ermittelte Drehzahl größer als der Schwellenwert, so wird die Antriebsmaschine in Schritt 9b in den aktiven Kurzschluss geschaltet.

Nach dem kontrollierten Abbremsen befindet sich das System unterhalb der Nulllinie in dem in Fig. 2 gezeigten System. Damit kann durch ein Beschleunigen der Antriebsmaschine in Schritt S11 ein Nulldurchgang bewirkt werden. Beim Nulldurchgang herrscht Drehmomentfreiheit an der Kupplung, so dass diese in Schritt S 13 gelöst bzw. ausgekuppelt werden kann. Die oben aufgeführten Schritte können automatisch, d.h. ohne die Notwendigkeit menschlichen Zutuns, beispielsweise von einer Kontrolleinheit, die mit den beteiligten Komponenten des Systems verbunden ist, ausgeführt bzw. angesteuert werden.
Abschließend wird angemerkt, dass Ausdrücke wie "aufweisend" oder ähnliche nicht ausschließen sollen, dass weitere Elemente oder Schritte vorgesehen sein können. Des Weiteren sei darauf hingewiesen, dass "eine" oder "ein" keine Vielzahl ausschließen.

## Patentansprüche

1. Verfahren zum Lastfreien Öffnen einer Trennkupplung, das Verfahren aufweisend die folgenden Schritte:
- Empfangen eines Auskuppelungs-Signals (S1);
- Anlegen eines negativen Drehmoments mittels einer Antriebsmaschine an die Trennkupplung (S9a, S9b), wobei das negative Drehmoment durch Einstellen eines Freilaufs der Antriebsmaschine oder durch einen aktiven Kurzschluss der Antriebsmaschine erzeugt wird, wobei das negative Drehmoment kleiner ist als ein Drehmoment einer Abtriebsseite;
- Anlegen eines positiven vordefinierten Drehmoments mittels der Antriebsmaschine an die Trennkupplung (S11), wobei das positive Drehmoment der Antriebsmaschine größer ist als das Drehmoment der Abtriebsseite;
- Öffnen der Trennkupplung, sobald der Betrag des an der Trennkupplung anliegenden Drehmoments innerhalb vorgegebener Grenzwerte liegt (S13).

2. Verfahren gemäß Anspruch 1, wobei das positive vordefinierte Drehmoment nach einem vordefinierten Zeitabschnitt nach dem Anlegen eines negativen Drehmoments angelegt wird.

3. Verfahren gemäß Anspruch1 oder 2, ferner aufweisend
- Erfassen einer Drehzahl der Antriebsmaschine (S5);
- Anlegen des negativen Drehmoments durch einen aktiven Kurzschluss der Antriebsmaschine für den Fall, dass die erfasste Drehzahl größer als ein Schwellenwert ist (S9b);
- Anlegen des negativen Drehmoments durch Umschalten in einen Freilauf der Antriebsmaschine, für den Fall, dass die erfasste Drehzahl kleiner als der Schwellenwert ist (S9a).

4. Kontrolleinheit zum Ansteuern einer Trennkupplung,
wobei die Kontrolleinheit ausgestaltet ist ein Auskuppelungs-Signal zu empfangen;
wobei die Kontrolleinheit ausgestaltet ist eine Antriebsmaschine, die mit der Trennkupplung verbunden ist derart anzusteuern, dass ein negatives Drehmoment an die Trennkupplung angelegt wird;
wobei die Kontrolleinheit ausgestaltet ist die Antriebsmaschine, die mit der Trennkupplung verbunden ist derart anzusteuern, dass nach einem vordefinierten Zeitabschnitt ein positives Drehmoment an die Trennkupplung angelegt wird;
wobei das negative Drehmoment kleiner ist als das Drehmoment der Abstriebsseite;
wobei das positive Drehmoment größer ist als das Drehmoment der Abstriebsseite;
wobei die Kontrolleinheit ausgestaltet ist die Trennkupplung zu öffnen, sobald der Betrag des an der Trennkupplung anliegenden Drehmoments innerhalb vorgegebener Grenzwerte liegt.

5. Kontrolleinheit, gemäß Anspruch 4 wobei die Kontrolleinheit ausgestaltet ist eine aktuelle Ist-Drehzahl der Antriebsmaschine mit einem Schwellenwert zu vergleichen.

6. Computerprogrammelement,
wobei das Computerprogrammelement ausgestaltet ist, das Verfahren gemäß einem der Ansprüche 1 bis 3 auszuführen, wenn es auf einem Prozessor ausgeführt wird.

7. Computerlesbares Medium,
wobei auf dem Medium das Programmelement gemäß Anspruch 6 gespeichert ist.

## Claims

1. Method for the load-free opening of a clutch, the method having the following steps:
- receiving a declutching signal (S1);
- applying a negative torque by means of a drive machine to the clutch (S9a, S9b), wherein the negative torque is generated by setting a freewheel of the drive machine or by means of active short-circuiting of the drive machine, wherein the negative torque is lower than a torque of an output side;
- applying a positive predefined torque by means of the drive machine to the clutch (S11), wherein the positive torque of the drive machine is greater than the torque of the output side; and
- opening the clutch as soon as the absolute value of the torque applied to the clutch is within predefined limiting values (S13).

2. Method according to Claim 1,
wherein the positive predefined torque is applied after a predefined time period after the application of a negative torque.

3. Method according to Claim 1 or 2,
also comprising
- detecting a rotational speed of the drive machine (S5) ;
- applying the negative torque by means of an active short circuit of the drive machine in the event of the detected rotational speed been higher than a threshold value (S9b); and
- applying the negative torque by switching over into a freewheel of the drive machine in the event of the detected threshold speed being lower than the threshold value (S9a).

4. Control unit for actuating a clutch, wherein the control unit is configured to receive a decoupling signal;
wherein the control unit is configured to actuate a drive machine, connected to the clutch, in such a way that a negative torque is applied to the clutch;
wherein the control unit is configured to actuate the drive machine, connected to the clutch, in such a way that after a predefined time period a positive torque is applied to the clutch;
wherein the negative torque is lower than the torque of the output side;
wherein the positive torque is greater than the torque of the output side;
wherein the control unit is configured to open the clutch as soon as the absolute value of the torque applied to the clutch is within predefined limiting values.

5. Control unit according to Claim 4,
wherein the control unit is configured to compare a current actual rotational speed of the drive machine relative to a threshold value.

6. Computer program element,
wherein the computer program element is configured to execute the method according to one of Claims 1 to 3 when it is executed on a processor.

7. Computer-readable medium,
wherein the program element according to Claim 6 is stored on the medium.

## Revendications

1. Procédé de débrayage hors charge d'un embrayage de coupure, le procédé comprenant les étapes suivantes :
- la réception d'un signal de désaccouplement (S1) ;
- l'application d'un couple négatif à l'embrayage de coupure (S9a, S9b) au moyen d'une machine motrice, dans lequel le couple négatif est généré par le réglage d'un fonctionnement en roue libre de la machine motrice ou par un court-circuit actif de la machine motrice, dans lequel le couple négatif est inférieur au couple d'un côté sortie ;
- l'application d'un couple positif prédéfini à l'embrayage de coupure (S11) au moyen de la machine motrice, dans lequel le couple positif de la machine motrice est supérieur au couple du côté sortie ;
- le débrayage de l'embrayage de coupure dès que la valeur du couple appliqué à l'embrayage de coupure se situe dans des valeurs limites prédéterminées (S13).

2. Procédé selon la revendication 1,
dans lequel le couple prédéfini positif est appliqué au bout d'une période de temps prédéfinie après l'application d'un couple négatif.

3. Procédé selon la revendication 1 ou 2, comprenant en outre
- la détection d'une vitesse de rotation de la machine motrice (S5) ;
- l'application du couple négatif par un court-circuit actif de la machine motrice dans le cas où la vitesse détectée est supérieure à une valeur de seuil (S9b) ;
- l'application du couple négatif en passant à un fonctionnement en roue libre de la machine motrice si la vitesse détectée est inférieure à la valeur de seuil (S9a).

4. Unité de commande pour la commande d'un embrayage de coupure,
dans laquelle l'unité de commande est conçue pour recevoir un signal de désaccouplement ;
dans laquelle l'unité de commande est conçue pour commander une machine motrice reliée à l'embrayage de coupure de manière à ce qu'un couple négatif soit appliqué à l'embrayage de coupure ;
dans laquelle l'unité de commande est conçue pour commander la machine motrice reliée à l'embrayage de coupure de manière à ce qu'après une période de temps prédéfinie, un couple positif soit appliqué à l'embrayage de coupure ;
dans laquelle le couple négatif est inférieur au couple du côté sortie ;
dans laquelle le couple positif est supérieur au couple du côté sortie ;
dans laquelle l'unité de commande est conçue pour débrayer l'embrayage de coupure dès que la valeur du couple appliqué à l'embrayage de coupure se situe dans des valeurs limites prédéterminées.

5. Unité de commande selon la revendication 4,
dans laquelle l'unité de commande est conçue pour comparer une vitesse réelle actuelle de la machine motrice à une valeur de seuil.

6. Élément de programme d'ordinateur,
dans lequel l'élément de programme d'ordinateur est conçu pour mettre en oeuvre le procédé selon l'une des revendications 1 à 3 lorsqu'il est exécuté sur un processeur.

7. Support lisible par ordinateur,
dans lequel l'élément de programme selon la revendication 6 est stocké sur le support.
